# EUROPEAN PATENT SPECIFICATION

(11) **EP 3 305 639 B1**
(45) Date of publication and mention of the grant of the patent: **23.01.2019**
(21) Application number: 17194657.7
(22) Date of filing: 04.10.2017
(51) Int. Cl.: B62J 25/00, B62J 17/00

(54) **STRADDLED VEHICLE**
GRÄTSCHSITZFAHRZEUG
VÉHICULE À ENFOURCHER

(30) Priority: 04.10.2016 JP 2016196789
(43) Date of publication of application: 11.04.2018
(73) Proprietor: Yamaha Hatsudoki Kabushiki Kaisha, Iwata-shi Shizuoka 438-8501 (JP)
(72) Inventor: KITAURA, Toshiaki, Iwata-shi, Shizuoka 438-8501 (JP)
(74) Representative: Grünecker Patent- und Rechtsanwälte PartG mbB

(56) References cited:
- EP-A1- 2 311 717
- EP-A1- 2 497 703
- CN-A- 101 468 689
- JP-A- 2010 058 761
- US-A1- 2006 254 844
- US-A1- 2013 057 016

## Description

### BACKGROUND

### Technical Field

The present invention relates to a straddled vehicle. More particularly, the present invention relates a straddled vehicle including a covering that covers the vehicle-body frame.

### Description of the Background Art

Straddled vehicles on which a cover covering the vehicle-body frame is mounted are known. For example, the cover attached to the straddled vehicle has the function of reducing air resistance. Further, the cover may play an important role in forming the appearance of the straddled vehicle. Some covers have the function of guiding air to the engine.

For example, JP 2013-47023 A discloses a shroud that covers part of the fuel tank provided above the engine from the sides. The shroud includes an air-guiding portion for guiding travel winds to the cylinder head of the engine. The shroud is supported by the sides of the fuel tank.

EP 497703 A1 discloses a straddled vehicle according to the preamble of claim 1.

### SUMMARY

The cover of a straddled vehicle is usually made from resin. If the portions of the cover to be knee-gripped are made from resin, These cover portions may not be able to resist loads from knee gripping, and may deform. To address this, the present application discloses a straddled vehicle including a covering having a sufficient stiffness for resisting loads from knee gripping.

The present inventors considered arrangements where portions of the vehicle-body frame that are located forward of the seat are covered with a resin cover. In such arrangements, the resin cover may receive loads from knee gripping. In such cases, the inventors found that the resin cover may not be able to resist loads from knee gripping.

In implementations where the resin cover mainly receives loads from knee gripping, the stiffness of the components being knee-gripped is insufficient unlike in constructions in which a metal component, such as a fuel tank, directly receives loads from knee gripping. Thus, it is assumed that the resin cover may not be able to resist loads from knee gripping.

In view of this, the inventors considered providing ribs on the resin cover to increase stiffness. However, if ribs protruding toward the outside of the resin cover are provided, the ribs abut the knees of the rider, making it difficult for the rider to knee grip. On the other hand, if ribs protruding toward the inside of the resin cover are provided, sink marks are produced at locations on the outer surface of the resin cover that correspond to the ribs (that is, irregularities are provided on the side of the cover that is opposite to that with the ribs, produced by the presence of the ribs). This deteriorates appearance.

The inventors did further research and arrived at arrangements with separate resin covers in front of the seat. That is, they found that a sufficient stiffness of the covering for resisting loads from knee gripping can be provided by providing a cover separate from the resin cover and located above the vehicle-body frame, positioning the rearmost point of this separate cover forward of the forwardmost point of the seat and connecting the upper edge of the cover to the lower edge of the resin cover.

A straddled vehicle according to an embodiment of the present invention includes: a vehicle-body frame; a seat supported by the vehicle-body frame; a resin cover provided forward of the seat as determined along a front-rear direction of the vehicle-body frame, the resin cover being located above the vehicle-body frame and forming an outer surface of a left portion and an outer surface of a right portion of the vehicle as determined along a left-right direction of the vehicle-body frame, the resin cover being made from a resin; and a knee-grip cover, at least a part of an upper edge of the knee-grip cover as determined along a top-bottom direction of the vehicle-body frame being adjacent to at least a part of a bottom edge of the resin cover as viewed from a side, the knee-grip cover having a rearmost point located forward of a forwardmost point of the seat as viewed from the side. At least one of the resin cover and the knee-grip cover includes a stepped portion located in a portion where the one connects with the other (first arrangement).

In the above-described first arrangement, the resin cover is located forward of the seat and above the vehicle-body frame to form the outer surfaces of left and right portions of the vehicle. That is, the resin cover is located above the vehicle-body frame to cover the vehicle-body frame at least from the left and right. The upper edge of the knee-grip cover is in contact with the lower edge of the resin cover as viewed from the side. The rearmost point of the knee-grip cover is located forward of the forwardmost point of the seat. As the resin cover and knee-grip cover are arranged as described above, the portions of the resin cover and knee-grip cover that are connected with each other are located close to the knees of the rider. This leads to large loads from knee gripping being positioned on the portions of the resin cover and knee-grip cover that are connected with each other. At least one of the resin cover and knee-grip cover includes a stepped portion located in an area where the resin cover and knee-grip cover are connected. This stepped portion increases the stiffness of the portions of the resin cover and knee-grip cover that are connected. That is, it increases the stiffness of the portions of the resin cover and knee-grip cover to which large loads from knee gripping are applied. This provides a straddled vehicle with a covering having a sufficient stiffness for resisting loads from knee gripping.

At least one of the resin cover and knee-grip cover may have a bent portion located in an area where the one of the resin cover and knee-grip cover connects with the other and bent inwardly relative to the outer surface. This is an implementation where at least one of the resin cover and knee-grip cover includes a stepped portion located in a portion where the one of the resin cover and knee-grip cover connects with the other. Another bent portion may be provided at a position located further inward of that bent portion.

Starting from the above-described first arrangement, a borderline between the resin cover and the knee-grip cover may include a line extending obliquely from the rearmost point of the knee-grip cover downwardly and forwardly as viewed from the side (second arrangement). The resin cover and knee-grip cover are connected at the borderline between the resin cover and knee-grip cover. Thus, the stiffness of the portions of the resin cover and knee-grip cover that are close to the borderline is high. In the second arrangement, the borderline is located in areas where loads from knee gripping are large. Further, as the borderline extends obliquely downward and forward, the borderline can easily be made along the direction in which the thighs of the rider extend. This makes it possible to more efficiently increase the stiffness of the covering for resisting loads from knee gripping.

Starting from the above-described first or second arrangement, the borderline between the resin cover and the knee-grip cover may include a portion located higher than the vehicle-body frame as viewed from the side (third arrangement). Thus, the border may reinforce portions of the covers located higher than the frame to compensate an insufficient stiffness, for example. Alternatively, another component located higher than the frame and supported by the frame may support the borderline. This makes it possible to more efficiently increase the stiffness of the covering for resisting loads from knee gripping.

Starting from one of the above-described first to third arrangements, the straddled vehicle may further include a fuel tank located higher than the vehicle-body frame, the fuel tank being supported by the vehicle-body frame and located forward of the seat. In this case, the resin cover may be a tank cover covering the fuel tank. The fuel tank may include a flange extending in the front-rear direction of the vehicle-body frame. The flange of the fuel tank may be located in a vicinity of at least one of the resin cover and the knee-grip cover (fourth arrangement). This further increases the stiffness of the resin cover or knee-grip cover for resisting loads from knee gripping. Implementations where one member is located in the vicinity of the other member include implementations where these two members are in direct contact with each other, as well as implementations where these two members are in contact with each other with another member provided in between, such as a shock absorber. That is, another member may be located between one member and the other member that is located in the vicinity of the one member. The flange of the fuel tank may be in direct contact with at least one of the resin cover and the knee-grip cover or in contact with at least one of the resin cover and the knee-grip cover with another member provided in between. Implementations where the flange of the fuel tank is located in the vicinity of at least one of the resin cover and the knee-grip cover include implementations where the flange of the fuel tank supports at least one of the resin cover and the knee-grip cover. In this implementations, there may be gap between the flange of the fuel tank and at least one of the resin cover and the knee-grip cover. In this case, the flange of the fuel tank can be in direct or indirect contact with the resin cover or the knee-grip cover to support them when the resin cover or the knee-grip cover receives loads from knee gripping.

Starting from one of the above-described first to fourth arrangements, the flange of the fuel tank may cross the borderline between the resin cover and the knee-grip cover as viewed from the side and may be located in a vicinity of a portion of each of the resin cover and the knee-grip cover that is adjacent to the borderline (fifth arrangement). In this arrangement, the improvement of the stiffness of the portions of the resin cover and knee-grip cover that are adjacent to the borderline is increased by the flange of the fuel tank. The flange of the fuel tank may support a portion of each of the resin cover and the knee-grip cover that is adjacent to the borderline. In this case, there may be gap between the flange of the fuel tank and the portion of each of the resin cover and the knee-grip cover that is adjacent to the borderline.

Starting from one of the above-described first to fifth arrangements, a portion of the vehicle-body frame located forward of the seat and covered with the resin cover may include one central frame portion located at a center of the straddled vehicle as determined along the left-right direction of the vehicle-body frame and extending in the front-rear direction (sixth arrangement). The inventors found that, if one central frame portion located at the center of the straddled vehicle and extending in the front-rear direction is provided forward of the seat, the stiffness of the resin cover covering this central frame portion is often insufficient for resisting loads from knee gripping. Thus, in an arrangement with one central frame portion located forward of the seat, the improvement of the stiffness due to the above-described resin cover and knee-grip cover can be suitably adopted.

Starting from one of the first to sixth arrangements, the straddled vehicle may further include a front side cover located forward of the knee-grip cover and covering a side of the vehicle-body frame (seventh arrangement). The knee-grip cover is located between the front side cover and seat as determined along the front-rear direction of the vehicle-body frame. Thus, the knee-grip cover is positioned such that loads from knee gripping tend to be applied thereto.

Starting from the seventh arrangement, the front side cover may have an air-duct inlet for passing air in the front-rear direction of the vehicle-body frame (eighth arrangement). This makes it possible to introduce air into the interior of the front side cover.

Starting from the eighth arrangement, the knee-grip cover may include: a screen plate, including a surface overlapping the air-duct inlet as viewed from a front; and a side plate extending rearward from the air-duct inlet and positioned to overlap the screen plate as viewed from the side (ninth arrangement). Thus, air that has entered the air-duct inlet is guided by the screen plate into the interior of the vehicle. Further, the screen plate and side plate prevent components of the straddled vehicle inside the knee-grip cover and side cover from being visible from the outside. This improves the appearance of the straddled vehicle. The side plate prevents the screen plate from being visible from the side. This also improves the appearance of the straddled vehicle.

Starting from the ninth arrangement, the knee-grip cover may include a rib extending rearward from the screen plate (tenth arrangement). The rib increases the stiffness of the knee-grip cover. Further, the rib makes it appear as if air that has entered the air-duct inlet flowed rearward. This improves the appearance of the straddled vehicle.

Starting from one of the first to the tenth arrangement, the knee-grip cover may be made from a resin. The front side cover may be made from a resin.

In the description of the first to tenth arrangements, "front" and "forward" mean the forward direction as determined along the front-rear direction with respect to the vehicle-body frame. "Rear(ward)" means the rear direction as determined along the front-rear direction with respect to the vehicle-body frame. "Above" and "higher" mean the upward direction as determined along the top-bottom direction with respect to the vehicle-body frame. "Below" and "lower" mean the downward direction as determined along the top-bottom direction with respect to the vehicle-body frame. "Side" means the left or right direction as determined along the left-right direction with respect to the vehicle-body frame. "Rearmost point" means the rearmost point as determined along the front-rear direction with respect to the vehicle-body frame. "Upper edge" means an upper edge as determined along the top-bottom direction with respect to the vehicle-body frame. "Lower edge" means a lower edge as determined along the top-bottom direction with respect to the vehicle-body frame. In one component, an edge that is not in the top-bottom direction of the vehicle-body frame is either an upper edge or a lower edge. For a given component, if the component is located higher than an edge as determined along the top-bottom direction of the vehicle-body frame, this edge is a lower edge. If the component is located lower than an edge of the component as determined along the top-bottom direction of the vehicle-body frame, this edge is an upper edge.

"As viewed from the side" means being viewed from the left or right as determined along the left-right direction with respect to the vehicle-body frame. "As viewed from the front" means being viewed from the front as determined along the front-rear direction with respect to the vehicle-body frame. These definitions also apply to the description below.

"The center of the straddled vehicle as determined along the left-right direction of the vehicle-body frame" is the same as the center of the straddled vehicle as determined along the vehicle-width direction.

Starting from one of the first to tenth arrangements, the borderline between the resin cover and the knee-grip cover may include a line extending obliquely from the rearmost point of the knee-grip cover upward and forward. Thus, the borderline is located in areas where loads from knee gripping are large. This makes it possible to more efficiently increase the stiffness of the covering for resisting loads from knee gripping.

Starting from one of the first to tenth arrangements, the forwardmost point of the knee-grip cover as determined along the front-rear direction of the vehicle-body frame may be located forward of the forwardmost point of the resin cover as determined along the front-rear direction of the vehicle-body frame. This makes it possible to position the knee-grip cover in areas where loads from knee gripping tend to be applied thereto.

Starting from one of the first to tenth arrangements, the straddled vehicle may include a steering shaft inserted into, and rotatably supported by, a head pipe provided on the front of the vehicle-body frame, and handlebars attached to the top of the steering shaft. A front fork is attached to the steering shaft. A front wheel is rotatably supported by the bottom end of the front fork.

The rearmost point of the knee-grip cover may be, for example, located lower than the handlebars as determined along the top-bottom direction of the vehicle-body frame. This makes it possible to position the knee-grip cover at an appropriate position to improve the stiffness of the covering for resisting loads from knee gripping. Further, the knee-grip cover may be located rearward of the handlebars as determined along the front-rear direction of the vehicle-body frame. This makes it possible to position the knee-grip cover at an appropriate position to improve the stiffness of the covering for resisting loads from knee gripping.

Starting from one of the first to tenth arrangements, the resin cover may be connected to the rearmost point of the knee-grip cover. Thus, the resin cover extends from above the knee-grip cover to a position located rearward thereof. This increases the stiffness of the resin cover compared with implementations where the resin cover is only present above the knee-grip cover.

Starting from one of the first to tenth arrangements, the resin cover may be connected to the rearmost point of the knee-grip cover and the lower edge thereof extending forward and downward from the rearmost point. Thus, the resin cover extends from above the knee-grip cover along the rear thereof to below it. This further increases the stiffness of the resin cover.

Starting from one of the first to tenth arrangement, the resin cover and the knee-grip cover may be located above a power unit suspended by the vehicle-body frame as viewed from the side. Thus, the portions in which the resin cover and knee-grip cover are connected each other can be positioned such that they can be knee-gripped more easily.

Starting from one of the first to tenth arrangements, the rearmost point of the knee-grip cover as viewed from the side may be located higher than the uppermost point of the front wheel as determined along the top-bottom direction of the vehicle-body frame. Further, as viewed from the side, the rearmost point of the knee-grip cover may be located rearward of the rearmost point of the front wheel as determined along the front-rear direction of the vehicle-body frame. This makes it possible to position the knee-grip cover at an appropriate position to improve the stiffness of the covering for resisting loads from knee gripping. The position of the rearmost point of the knee-grip cover relative to the front wheel is the one found when the steering angle of the front wheel is 0 degrees, i.e. when the rotational axis of the front wheel coincides with the left-right direction of the vehicle-body frame.

### BRIEF DESCRIPTION OF THE DRAWINGS

FIG. 1 is a left side view of an entire vehicle as viewed from its left.
FIG. 2 is a perspective view of the fuel tank 23 as viewed from the top left front.
FIG. 3 is a cross-sectional view taken along line III-III in FIG. 1, as viewed from the front.
FIG. 4 is a cross-sectional view taken along line IV-IV in FIG. 1, as viewed from the front.
FIG. 5 is a left side view of the resin cover, knee-grip cover and front side cover shown in FIG. 1.
FIG. 6 is a cross-sectional view taken along line C-C in FIG. 5, as viewed from above.
FIG. 7 is a perspective view of the front side view as viewed from the top left front.
FIG. 8 is a perspective view of the screen plate and nearby components as viewed from the left rear.
FIG. 9 is a cross-sectional view taken along line AM shown in FIG. 5.
FIG. 10 is a cross-sectional view taken along line AL shown in FIG. 5.
FIG. 11 is a perspective view of the resin cover as viewed from the top left front.

### DETAILED DESCRIPTION OF THE PREFERRED EMBODIMENTS

An embodiment of the present invention will be described below in detail with reference to the drawings.

In the drawings, arrow "F" indicates the forward direction with respect to the vehicle. Arrow "B" indicates the rearward direction with respect to the vehicle. Arrow "U" indicates the upward direction with respect to the vehicle. Arrow "D" indicates the downward direction with respect to the vehicle. Arrow "R" indicates the right direction with respect to the vehicle. Arrow "L" indicates the left direction with respect to the vehicle.

The vehicle-body frame may be inclined relative to the vertical direction toward the left or right with respect to the vehicle or forward or rearward with respect to the vehicle. In view of this, in addition to the directions with respect to the vehicle, directions with respect to the vehicle-body frame will be defined. In the accompanying drawings, the forward and rearward directions, the left and right directions and the upward and downward directions with respect to the vehicle-body frame coincide with the forward and rearward directions, the left and right directions and the upward and downward directions with respect to the vehicle. That is, the accompanying drawings show the vehicle being upright without being inclined toward the left or right.

In this specification, "front-rear direction of the vehicle-body frame", "left-right direction of the vehicle-body frame" and "top-bottom direction of the vehicle-body frame" mean the front-rear direction, left-right direction and top-bottom direction as perceived by a rider operating the vehicle with respect to the vehicle-body frame. The left-right direction of the vehicle-body frame is the same as the vehicle-width direction.

In the following description, the simple terms "front/forward", "rear(ward)", "left", "right", "upward/higher/above" and "downward/lower/below" mean the forward direction as determined along the front-rear direction of the vehicle-body frame, the rearward direction as determined along the front-rear direction of the vehicle-body frame, the left direction as determined along the left-right direction of the vehicle-body frame, the right direction as determined along the left-right direction of the vehicle-body frame, the upward direction as determined along the top-bottom direction of the vehicle-body frame, and the downward direction as determined along the top-bottom direction of the vehicle-body frame.

In this specification, "extend forwardly as determined along the front-rear direction of the vehicle-body frame" may also mean that something extends in a direction angled relative to the front-rear direction of the vehicle-body frame. "Extend rearwardly as determined along the front-rear direction of the vehicle-body frame" may also mean that something extends in a direction angled relative to the front-rear direction of the vehicle-body frame.

In this specification, "extend to the left as determined along the left-right direction of the vehicle-body frame" may also mean that something extends in a direction angled relative to the left-right direction of the vehicle-body frame. "Extend to the right as determined along the left-right direction of the vehicle-body frame" may also mean that something extends in a direction angled relative to the left-right direction of the vehicle-body frame.

In this specification, "extend upwardly as determined along the top-bottom direction of the vehicle-body frame" may also mean that something extends in a direction angled relative to the top-bottom direction of the vehicle-body frame. "Extend downwardly as determined along the top-bottom direction of the vehicle-body frame" may also mean that something extends in a direction angled relative to the top-bottom direction of the vehicle-body frame.

In this specification, "the vehicle-body frame being upright" means that the top-bottom direction of the vehicle-body frame coincides with the vertical direction. In this state, a direction with respect to the vehicle coincides with the corresponding direction with respect to the vehicle-body frame. When the vehicle-body frame is leaning toward the left or right relative to the vertical direction, the left-right direction of the vehicle does not coincide with the left-right direction of the vehicle-body frame, nor does the top-bottom direction of the vehicle coincide with the top-bottom direction of the vehicle-body frame. On the other hand, the front-rear direction of the vehicle coincides with the front-rear direction of the vehicle-body frame even when the vehicle-body frame is leaning toward the left or right relative to the vertical direction.

In this specification, "connection" may mean not only physical connection, but electrical connection and a state that allows for communication. Physical connection may mean that, for example, two members are directly connected to each other, or that two members are indirectly connected to each other with another member provided therebetween.

### (Vehicle Construction)

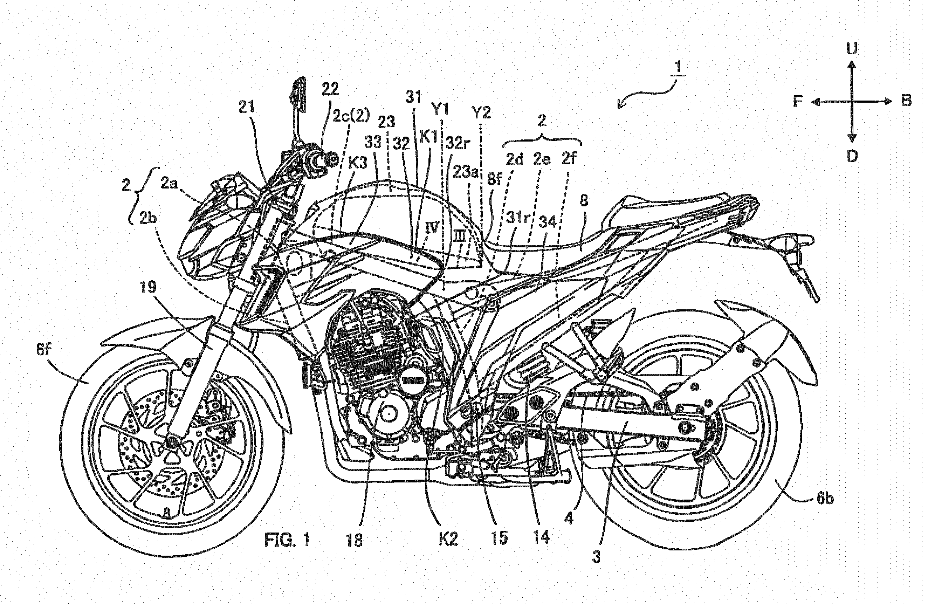

FIG. 1 is a left side view of a straddled vehicle according to the present embodiment. The straddled vehicle 1 shown in FIG. 1 (hereinafter simply referred to as vehicle 1) is a motorcycle. The vehicle 1 includes a vehicle-body frame 2, a power unit 18, a front wheel 6f, a rear wheel 6b, handlebars 22, a steering shaft 21, a front fork 19, a fuel tank 23, a seat 8, a rear suspension 14, and a rear arm 3.

The vehicle-body frame 2 includes a head pipe 2a, a downtube 2b, a main frame portion 2c, a vertical frame portion 2d, a rear upper frame portion 2e, and a rear lower frame portion 2f. The main frame portion 2c extends in the front-rear direction. The main frame portion 2c is located at the center of the vehicle 1 as determined along the left-right direction of the vehicle-body frame 2. The main frame portion 2c is an example of a central frame portion. The main frame portion 2c is implemented by a single tubular member. As viewed from the side, the front portion of the main frame portion 2c is located higher than the rear portion as determined along the top-bottom direction of the vehicle-body frame 2.

The front of the main frame portion 2c is connected to the head pipe 2a. The downtube 2b extends downwardly from the head pipe 2a. The rear upper frame portion 2e extends rearwardly from the rear of the main frame portion 2c. The vertical frame portion 2d extends downward from the rear of the main frame portion 2c. The rear lower frame portion 2f is located below the rear upper frame portion 2e. The front of the rear lower frame portion 2f is connected to the bottom of the vertical frame portion 2d, and the rear of the rear lower frame portion 2f is connected to the rear of the rear upper frame portion 2e.

The downtube 2b, vertical frame portion 2d, rear upper frame portion 2e, and rear lower frame portion 2f each include a pair of frame portions to the left and right. The power unit 18 is supported (suspended) by the downtube 2b, main frame portion 2c and vertical frame portion 2d. The power unit 18 is located lower than the main frame portion 2c and rearward of the downtube 2b and forward of the vertical frame portion 2d.

The rear arm 3 is swingably supported by the bottom of the vertical frame portion 2d. The rear arm 3 is swingable about a pivot shaft 15 that is rotatably supported by the vertical frame portion 2d. The direction of the axis of the pivot shaft 15 for the rear arm 3 is the same as the left-right direction of the vehicle-body frame 2. The seat 8 is placed on the rear upper frame portion 2e. The seat 8 is supported by the rear upper frame portion 2e.

The rear wheel 6b is rotatably supported by the rear arm 3. A rear portion of the rear arm 3 rotatably supports the axle of the rear wheel 6b.

The power unit 18 includes a power source such as an engine, electric motor or battery, and devices such as a transmission. Rotation generated by the power source of the power unit 18 is transmitted to the rear wheel 6b via a transmission, a chain 4 and other transfer members.

The steering shaft 21 is rotatably inserted into the head pipe 2a. The handlebars 22 are attached to the top of the steering shaft 21. The front fork 19 including a pair of legs to the left and right is attached to the steering shaft 21 with a bracket (not shown) provided therebetween. The front wheel 6f is rotatably supported by the bottom end of the front fork 19. As the handlebars 22 are operated, the front wheel 6f rotates to the left or right.

The fuel tank 23 is located forward of the seat 8. The fuel tank 23 is supported by the main frame portion 2c to be located above the main frame portion 2c.

The vehicle 1 includes a resin cover 31 that covers the main frame portion 2c and fuel tank 23 from above. The resin cover 31 is located forward of the seat 8. The resin cover 31 is one example of a cover that is located above the vehicle-body frame and covers the vehicle-body frame from the left and right as determined along the left-right direction of the vehicle-body frame. In this implementation, the resin cover 31 covers the vehicle-body frame from the left, right and above. The resin cover 31 is made from a resin.

The resin cover 31 includes portions located to the left of the main frame portion 2c and overlapping the main frame portion 2c as viewed from the side. The resin cover 31 extends from a position located to the left of the main frame portion 2c upwardly and to the right and straddles the main frame portion 2c and extends to a position located to the right of the main frame portion 2c. The resin cover 31 includes portions located to the right of the main frame portion 2c and overlapping the main frame portion 2c as viewed from the side (not shown). The resin cover 31 may be symmetrical in shape. It should be noted that the resin cover 31 may have no portions overlapping the main frame portion 2c as viewed from the side. Thus, the resin cover 31 includes a part that is located above and to the left of the main frame portion 2c to cover the vehicle-body frame, and a part that is located above and to the right of the main frame portion 2c to cover the vehicle-body frame.

In the implementation shown in FIG. 1, the resin cover 31 extends to a position located lower than the main frame portion 2c as determined along the top-bottom direction of the vehicle-body frame 2. That is, the resin cover 31 extends from a position located lower than the main frame portion 2c to a position located higher than the main frame portion 2c as determined along the top-bottom direction of the vehicle-body frame 2.

In the implementation shown in FIG. 1, the resin cover 31 plays a role as a tank cover for covering the fuel tank 23. The resin cover 31 covers the top and the left and right sides of the fuel tank 23. The top surface of the fuel tank 23 is located higher than the top surface of the seat 8 as determined along the top-bottom direction of the vehicle-body frame 2. As viewed from the side, the resin cover 31 includes portions located as high as the top surface of the seat 8 and portions located higher than the top surface of the seat 8. That is, as determined along the top-bottom direction of the vehicle-body frame, the resin cover 31 extends from a position located as high as the top surface of the seat 8 to a position located higher than the top surface of the seat 8. The resin cover 31 includes portions located lower than the seat 8. That is, as determined along the top-bottom direction of the vehicle-body frame 2, the resin cover 31 extends from a position located lower than the seat 8 to a position located higher than the seat 8.

The resin cover 31 is located between the head pipe 2a and seat 8 as determined along the front-rear direction of the vehicle-body frame 2. The rear of the resin cover 31 is in contact with the seat 8. The forwardmost point 8f of the seat 8 is in contact with the resin cover 31. As determined along the front-rear direction of the vehicle-body frame 2, the forwardmost point of the resin cover 31 is generally located at the same position as the rearmost point of the head pipe 2a. The rearmost point 31r of the resin cover 31 is located rearward of the forwardmost point 8f of the seat 8. The rearmost point 31r of the resin cover 31 is located below the seat 8. As determined along the front-rear direction of the vehicle-body frame 2, the rearmost point of the resin cover 31 is generally located at the same position as the rearmost point of the main frame portion 2c. The resin cover 31 is positioned to overlap the main frame portion 2c as determined along the front-rear direction of the vehicle-body frame 2.

Below the resin cover 31 are provided a pair of knee-grip covers 32 located adjacent to the resin cover 31 and a pair of front side cover 33 located adjacent to the resin cover 31. Each front side cover 33 is located forward of the associated knee-grip cover 32. The knee-grip cover 32 and front side cover 33 may be made from a resin, for example.

As viewed from the side, the rearmost point 32r of the knee-grip cover 32 is located forward of the forwardmost point 8f of the seat 8 as determined along the front-rear direction of the vehicle-body frame 2. The vertical line Y1 passing through the rearmost point 32r of the knee-grip cover 32 is located forward of the vertical line Y2 passing through the forwardmost point 8f of the seat 8. A part of the lower edge of the resin cover 31 is connected with a part of the upper edge of the knee-grip cover 32. That is, a part of the lower edge of the resin cover 31 is adjacent to a part of the upper edge of the knee-grip cover 32. More specifically, the lower edge of the resin cover 31 is connected with the upper edge of the knee-grip cover 32 along a line K1, which is a portion of the borderline between the resin cover 31 and knee-grip cover 32 extending upward and forward from the rearmost point 32r of the knee-grip cover 32.

Thus, the knee-grip cover 32 includes portions located lower than the resin cover 31 and forward of the seat 8. Further, the resin cover 31 is located between the knee-grip cover 32 and seat 8. The rearmost point 32r of the knee-grip cover 32 is connected with the resin cover 31. Thus, the resin cover 31 extends downward from behind the knee-grip cover 32. That is, the resin cover 31 is located rearward and downward of the knee-grip cover 32. Thus, as viewed from the side, the borderline K1/K2 between the knee-grip cover 32 and resin cover 31 is arranged to expand forward from the rearmost point 32r of the knee-grip cover 32 located forward of the seat 8. That is, the borderline K1/K2 is positioned in areas to which loads from knee gripping are likely to be applied.

The knee-grip cover 32 and resin cover 31 are connected with each other near the borderline K1/K2 between the knee-grip cover 32 and resin cover 31. Portions of at least one of the knee-grip cover 32 and resin cover 31 that are connected with portions of the other one have a stepped portion. Thus, portions of the knee-grip cover 32 and resin cover 31 that are located near the borderline K1/K2 have larger stiffnesses than the other portions. This increases the stiffness of portions of the knee-grip cover 32 and resin cover 31 to which loads from knee gripping are likely to be applied.

Thus, in the present embodiment, the shape and positioning of the resin cover 31 and knee-grip cover 32 improves their stiffness for resisting loads from knee gripping. This will provide an appropriate stiffness that is suitable for loads from knee gripping expected in the straddled vehicle without adding a new component for increasing stiffness, such as a reinforcing member.

As viewed from the side, the borderline K1/K2 between the resin cover 31 and knee-grip cover 32 includes a line K1 extending obliquely from the rearmost point 32r of the knee-grip cover 32 upward and forward and a line K2 extending obliquely from the rearmost point 32r of the knee-grip cover 32 downward and forward. This efficiently improves the stiffness of the covering for resisting loads from knee gripping.

As viewed from the side, the lines K1 and K2 that form the borderline between the resin cover 31 and knee-grip cover 32 includes portions located higher than the main frame portion 2c. In the implementation shown in FIG. 1, the fuel tank 23 is located above the main frame portion 2c. By positioning a portion of the borderline between the resin cover 31 and knee-grip cover 32 higher than the main frame portion 2c, the fuel tank 23 may be positioned close to the resin cover 31 or knee-grip cover 32. This increases the stiffness of the resin cover 31 and knee-grip cover 32.

As viewed from the side, the line K2 that forms a portion of the borderline between the resin cover 31 and knee-grip cover 32 extends from the rearmost portion 32r of the knee-grip cover 32 and crosses the main frame portion 2c, and extends to below the main frame portion 2c. That is, the line K2 is located forward of the seat 8 and below the fuel tank 23. The direction in which the line K2 extends is consistent with the direction in which the thigh of the rider extends. As such, loads from knee gripping tend to be applied to the regions of the covering along the line K2. Although loads from knee gripping tend to be applied to these regions, the regions have nothing located in the vicinity of the resin cover 31 and knee-grip cover 32. However, since the line K2 passes thereby, a sufficient stiffness for resisting loads from knee gripping can be provided. Thus, the line K2 reinforces the portions of the covering along the direction in which the thigh of the rider extends, to which loads from knee gripping may be applied but which may have insufficient stiffness.

The fuel tank 23 includes a flange 23a extending in the front-rear direction of the vehicle-body frame 2. The flange 23a on the fuel tank 23 is located in the vicinity of at least one of the resin cover 31 and knee-grip cover 32.

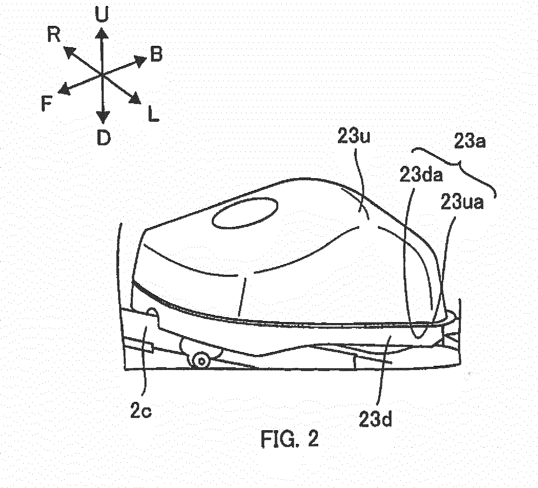

FIG. 2 is a perspective view of the fuel tank 23 as viewed from the top left front. FIG. 2 shows the tank with the resin cover 31 removed. Central portions of the fuel tank 23 as determined along the left-right direction are supported by the main frame portion 2c. That is, the main frame portion 2c is in contact with the center of the lower surface of the fuel tank 23 as determined along the left-right direction. The fuel tank 23 is constructed by combining an upper container 23u and a lower container 23d. The opening of the upper container 23u and the opening of the lower container 23d face each other to close the openings, and then the upper and lower containers 23u and 23d are coupled. Sub-flanges 23ua and 23da are provided on the edges of the openings of the upper and lower containers 23u and 23d, respectively, to project toward the outside of the containers. These sub-flanges 23ua and 23da are joined together. The joined sub-flanges 23ua and 23da of the upper and lower containers 23u and 23d form the flange 23a on the fuel tank 23. The flange 23a projects from the surface of the fuel tank 23. Thus, the flange 23a can be positioned in the vicinity of the resin cover 31 and knee-grip cover 32.

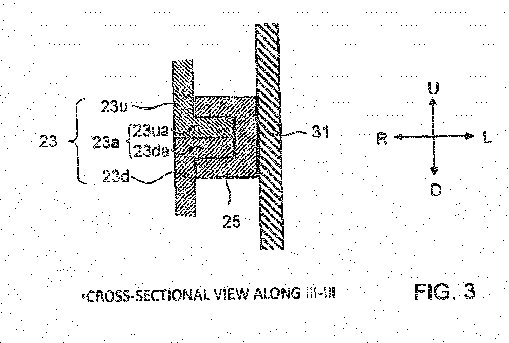

FIG. 3 is a cross-sectional view taken along line III-III in FIG. 1 as viewed from the front. In the implementation shown in FIG. 3, the flange 23a on the fuel tank 23 is located in the vicinity of the resin cover 31 with a shock absorber 25 provided therebetween. The shock absorber 25 covers the flange 23a. The shock absorber 25 covering the flange 23a is in contact with the inner surface of the resin cover 31.

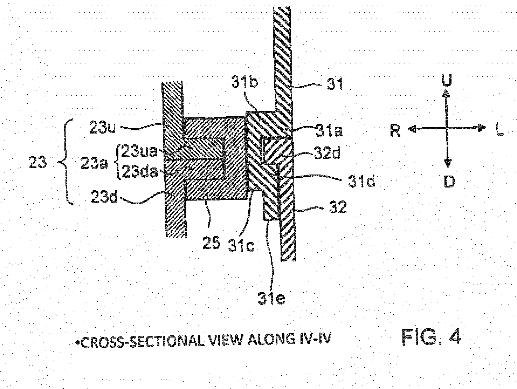

FIG. 4 is a cross-sectional view taken along line IV-IV in FIG. 1 as viewed from the front. In the implementation shown in FIG. 4, the flange 23a on the fuel tank 23 is located in the vicinity of the connection between the resin cover 31 and knee-grip cover 32. Portions of the resin cover 31 connected to the knee-grip cover 32 have a stepped portion. The stepped portion of the resin cover 31 includes bent portions 31a, 31b, 31c and 31d. That is, portions of the resin cover 31 connected to the knee-grip cover 32 include a bent portion 31a bent inward from the surface of the resin cover 31 (i.e. inward as determined along the thickness direction of the resin cover 31), and three bent portions 31b, 31c and 31d located between the bent portion 31a and the edge. The three bent portions 31b, 31c and 31d form a groove located adjacent the edge of the resin cover 31 and recessed inwardly. Portions of the knee-grip cover 32 connected to the resin cover 31 also include a stepped portion. The stepped portion of the knee-grip cover 32 includes a bent portion 32d that is bent inwardly. The presence of the bent portion 32d results in the edge of the knee-grip cover 32 protruding inwardly. The edge of the knee-grip cover 32 protruding inwardly is fitted into the groove formed by the three bent portions 31b, 31c and 31d of the resin cover 31.

In the areas where the resin cover 31 and knee-grip cover 32 are connected, the outer surface of the resin cover 31 is flush with the outer surface of the knee-grip cover 32. In the areas where the resin cover 31 and knee-grip cover 32 are connected, the resin cover 31 and knee-grip cover 32 overlap each other in the thickness direction. Thus, the portions of the resin cover 31 and knee-grip cover 32 connected with each other protrude inwardly. The flange 23a of the fuel tank 23 is located in the vicinity of the portions of the resin cover 31 and knee-grip cover 32 connected with each other and protruding inwardly, with the shock absorber 25 provided therebetween.

Referring to FIG. 1, as viewed from the side, the flange 23a of the fuel tank 23 crosses the line K1, which is a part of the borderline between the resin cover 31 and knee-grip cover 32. The flange 23a is located in the vicinity of the resin cover 31 and knee-grip cover 32 in areas where the flange 23a crosses the line K1 as viewed from the side. As viewed from the side, a portion of the line K1 located higher than the main frame portion 2c crosses the flange 23a of the fuel tank 23. Further, the line K1 includes portions that extend generally parallel to the flange 23a and overlap the flange 23a as viewed from the side. Thus, larger areas of the resin cover 31 and knee-grip cover 32 are supported by the flange 23a.

The line K1, which is a part of the borderline between the resin cover 31 and knee-grip cover 32 that extends upward and forward from the rearmost point 32r, overlaps the fuel tank 23 as viewed from the side. That is, the knee-grip cover 32 covers a lower portion of the fuel tank 23 from the left and right as determined along the left-right direction of the vehicle-body frame.

In the implementation shown in FIG. 1, the rearmost point 32r of the knee-grip cover 32 is located lower than the lowermost points of the handlebars 22 as determined along the top-bottom direction of the vehicle-body frame 2. Further, the knee-grip cover 32 is located rearward of the handlebars 22 as determined along the front-rear direction of the vehicle-body frame 2. Thus, the knee-grip cover can be positioned such that loads from knee gripping tend to be applied thereto. Further, the rearmost point 32r of the knee-grip cover 32 is located higher, as determined along the top-bottom direction of the vehicle-body frame, than the uppermost point of the front wheel 6f as unturned. The rearmost point 32r of the knee-grip cover 32 is located rearward, as determined along the front-rear direction of the vehicle-body frame, of the rearmost point of the front wheel 6f as unturned.

As shown in FIG. 1, a rear side cover 34 is provided lower than the seat 8 to cover the side of the vehicle-body frame. The rear side cover 34 extends from below the seat 8 to above the rear wheel 6b. The front of the rear side cover 34 is adjacent to the rear of the resin cover 31. That is, the rear portion of the resin cover 31 extends downwardly and then between the rear side cover 34 and knee-grip cover 32.

As shown in FIG. 1, the front side cover 33 is located forward of the knee-grip cover 32 and covers the side of the vehicle-body frame 2. FIG. 1 shows the front side cover 33 covering the left side of the vehicle-body frame 2. Similarly, a front side cover 33 covering the right side of the vehicle-body frame 2 is provided on the right side of the vehicle-body frame 2. The left front side cover 33 and right front side cover 33 are positioned to be mirror images of each other. Each front side cover 33 overlaps the main frame portion 2c, head pipe 2a, and downtube 2b as viewed from the side. The front side covers 33 hide the portions of the head pipe 2a, main frame portion 2c and downtube 2b that join together such that these portions are not visible from the side.

Each front side cover 33 is located lower than the associated resin cover 31 and is adjacent to the resin cover 31. Further, the front side cover 33 is located forward of the knee-grip cover 32 and is adjacent to the knee-grip cover 32. As such, the borderline between the front side cover 33 and resin cover 31 (hereinafter referred to as line K3) and the line K1 which is a portion of the borderline between the resin cover 31 and knee-grip cover 32 form a continuous line. The uppermost point of the line K3 is located higher than the main frame portion 2c as viewed from the side. The line K3 extends from the uppermost point rearwardly and downwardly to connect to the line K1. Further, the line K3 extends from the uppermost point forwardly and downwardly. The line K3 overlaps the fuel tank 23 as viewed from the side. That is, the front side covers 33 cover a lower portion of the fuel tank 23 from the left and right as determined along the left-right direction of the vehicle-body frame.

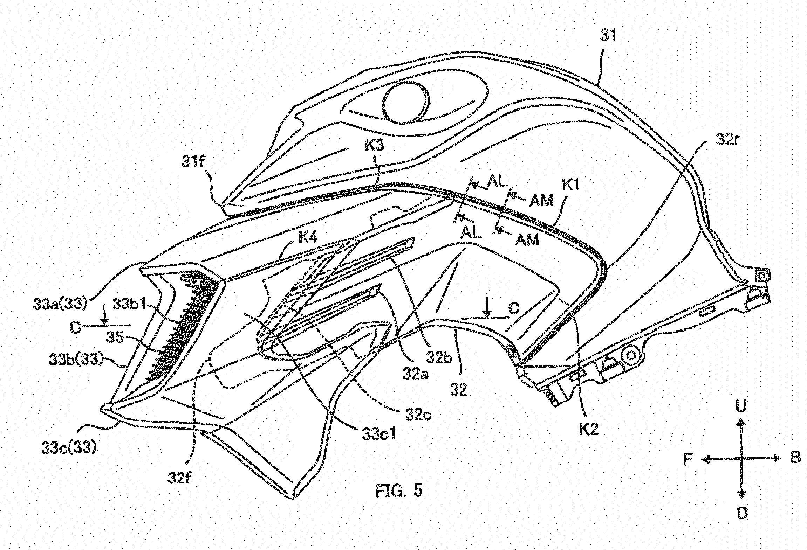

FIG. 5 is a left side view of the resin cover 31, knee-grip cover 32 and front side cover 33 shown in FIG. 1. The front side cover 33 includes an air-duct inlet 35 for allowing air to move in the front-rear direction of the vehicle-body frame 2. The front side cover 33 is constructed by combining a first cover portion 33a, a second cover portion 33b, and a third cover portion 33c. The second and third cover portions 33b and 33c are arranged in the left-right direction. That is, as viewed from the side, a part of the second cover portion 33b overlaps a part of the third cover portion 33c. The first cover portion 33a is connected to the top of the second cover portion 33b and the top of the third cover portion 33c.

The portions of the second and thread cover portions 33b and 33c that overlap each other as viewed from the side are partially separated from each other as determined along the left-right direction. The space defined by the second and third cover portions 33b and 33c provides the air-duct inlet 35. The top of the air-duct inlet 35 is covered with the first cover portion 33a. The plate-shaped portion of the third cover portion 33c that is separated from the second cover portion 33b and overlaps the second cover portion 33b as viewed from the side will be hereinafter referred to as side plate 33c1. An air-passing plate 33b1 having a honeycomb structure is provided the in the air-duct inlet 35 for allowing air to pass therethrough in the front/rear direction. The air-passing plate 33b1 includes a plurality of bundles of tubes extending in the front-rear direction.

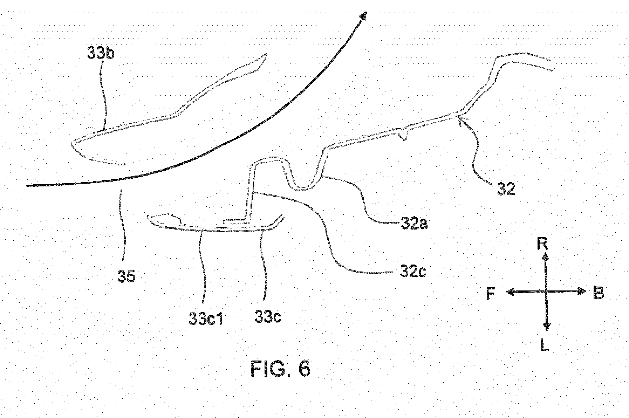

FIG. 6 is a cross-sectional view taken along line C-C in FIG. 5 as viewed from above. FIG. 6 does not show the air-passing plate 33b1. As shown in FIG. 6, the space defined by the second and third cover portions 33b and 33c arranged and separated in the left-right direction provides the air-duct inlet 35. Since the second and third cover portions 33b and 33c extend in the front-rear direction, the space defined by the second and third cover portions 33b and 33c extends in the front-rear direction. As such, the air-duct inlet 35 allows air to move in the front-rear direction.

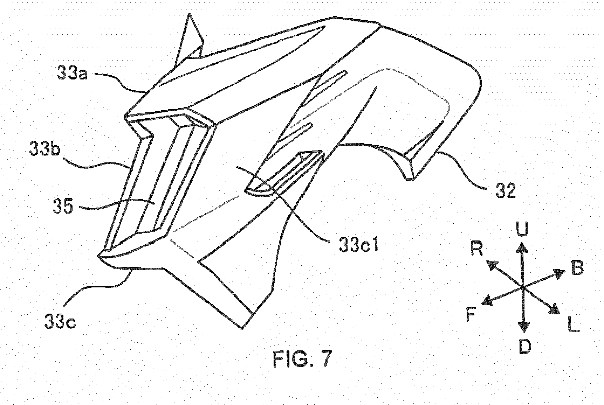

FIG. 7 is a perspective view of the front side cover 33 as viewed from the top left front. As shown in FIG. 7, the bottom of the second cover portion 33b is connected with the bottom of the third cover portion 33c. The third cover portion 33c (or side plate 33c1) provides a left wall for the air-duct inlet 35, the second cover portion 33b provides a right wall for the air-duct inlet 35, and the first cover portion 33a provides a ceiling for the air-duct inlet 35. Thus, the front side cover 33 defines an inlet (or air scoop) for letting air in.

As shown in FIG. 5, a front portion of the knee-grip cover 32 overlaps the third cover portion 33c as viewed from the side. That is, the side plate 33c1 of the third cover portion 33c also overlaps the knee-grip cover 32 as viewed from the side. A screen plate 32c is provided on a portion of the knee-grip cover 32 that overlaps the side plate 33c1 as viewed from the side. The screen plate 32c has a surface that overlaps the air-duct inlet 35 as viewed from the front. As viewed from the side, the screen plate 32c is positioned to be hidden by the side plate 33c1 to be not visible.

The knee-grip cover 32 includes ribs 32a and 32b extending rearward from the screen plate 32c. As viewed from the side, the ribs 32a and 32b extend from positions that overlap the side plate 33c1 rearward and upward to reach a region that is not covered with the side plate 33c1. The width of each of the ribs 32a and 32b, as measured in the top-bottom direction, continuously decreases as it goes rearward. This makes the impression that air entering the air-duct inlet 35 would exit the space between the side plate 33c1 and knee-grip cover 32 and be guided rearward by the ribs 32a and 32b as viewed from the side. Further, the ribs 32a and 32b further increase the stiffness of the knee-grip cover 32.

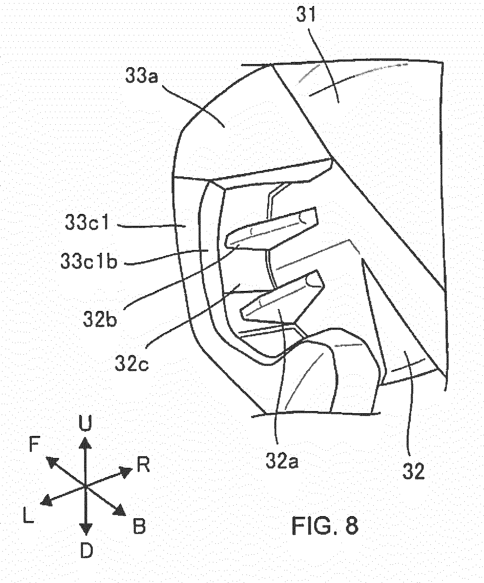

FIG. 8 is a perspective view of the screen plate 32c and nearby components as viewed from the left rear. As shown in FIG. 8, the screen plate 32c blocks the space between the side plate 33c1 and second cover portion 33b. The screen plate 32c is formed by bending the knee-grip cover 32 toward the left (see also FIG. 6). Further, the rear edge 33c1b, as determined along the front-rear direction of the vehicle-body frame, of the side plate 33c1 of the third cover portion 33c is separated from the knee-grip cover 32. Further, the rear edge 33c1b of the side plate 33c1 is not in contact with the ribs 32a and 32b. A space is defined by the side plate 33c1 and knee-grip cover 32. The top of this space is covered with the first cover portion 33a. This makes it appear as if an outlet for allowing air that has entered the air-duct inlet 35 to exit were provided on the rear edge 33c1 b of the side plate 33c1 as viewed from the side. That is, the space surrounded by the side plate 33c1, knee-grip cover 32 and first cover portion 33a is shaped to simulate an outlet.

As shown in FIG. 6, the screen plate 32c overlaps the air-duct inlet 35 in the front-rear direction. Thus, air that has entered the air-duct inlet 35 is introduced into the interior of the vehicle 1. This allows air to enter the interior of the knee-grip cover 32. Air that has entered the interior of the knee-grip cover 32 pushes the inner surface of the knee-grip cover 32 outward. Thus, loads from knee gripping that push the knee-grip cover 32 inward are countered by forces of air inside the knee-grip cover 32 that pushes the cover. This improves the resistance of the knee-grip cover 32 against loads from knee gripping.

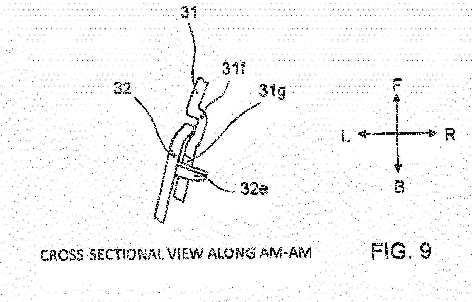

FIG. 9 is a cross-sectional view taken along line AM shown in FIG. 5. FIG. 9 shows portions of the resin cover 31 and knee-grip cover 32 connected with each other. A portion of the resin cover 31 that is connected with the knee-grip cover 32 has a stepped portion. The stepped portion includes a bent portion 31f bent inwardly as determined along the thickness direction relative to the surface of the resin cover 31. A hole 31g is provided between the bent portion 31f and the edge of the resin cover 31. The knee-grip cover 32 includes a protrusion 32e located in an area where the cover is connected with the resin cover 31 and protruding inwardly as determined along the thickness direction. The protrusion 32e is inserted into the hole 31g of the resin cover 31. The protrusion 32e is in contact with the lower edge of the hole 31g. This prevents the knee-grip cover 32 from shifting downward relative to the resin cover 31.

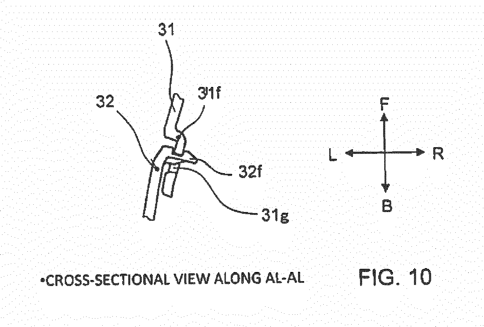

FIG. 10 is a cross-sectional view taken along line AL shown in FIG. 5. FIG. 10 shows portions of the resin cover 31 and knee-grip cover 32 connected with each other. The portions of the knee-grip cover 32 connected with the resin cover 31 have an edge 32f that is bent inwardly. The edge 32f is inserted into the hole 31g in the resin cover 31. The edge 32f is in contact with the upper edge of the hole 31g. This prevents the knee-grip cover 32 from shifting upward relative to the resin cover 31. Providing a mechanism at the connection between the resin cover 31 and knee-grip cover 32 for preventing shifts in different directions as shown in FIG. 9 and 10 further improves the stiffness of the resin cover 31 and knee-grip cover 32 for resisting loads from knee gripping.

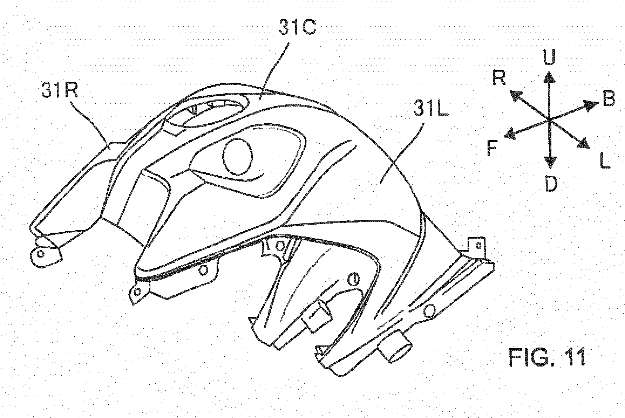

FIG. 11 is a perspective view of the resin cover 31 as viewed from the top left front. In the implementation shown in FIG. 11, the resin cover 31 is constructed by combining a left resin cover portion 31L, a central resin cover portion 31C and a right resin cover portion 31R. The left resin cover portion 31L covers the vehicle-body frame from the left. The right resin cover portion 31R covers the vehicle-body frame from the right. The central resin cover portion 31C covers the vehicle-body frame from above. The central resin cover portion 31C is connected to the top of the left resin cover portion 31L and the top of the right resin cover portion 31R.

When the resin cover 31 is mounted on the vehicle 1 shown in FIG. 1, the left resin cover portion 31L is located to the left of the main frame portion 2c. The left resin cover portion 31L located to the left of the main frame portion 2c, extends to a position located higher than the main frame 2c. The right resin cover portion 31R is located to the right of the main frame portion 2c. The right resin cover portion 31R, located to the right of the main frame portion 2c, extends to a position located higher than the main frame portion 2c. The central resin cover portion 31C is located above the main frame portion 2c.

The resin cover 31 is not limited to the implementation shown in FIG. 11 with a plurality of separate covers combined. For example, the resin cover 31 covering the left, right and top of the vehicle-body frame may be integrally formed. Alternatively, the central resin cover 31C may be omitted. In such implementations, the resin cover 31 is composed of left and right resin cover portions 31L and 31R separated from each other and located to the left and right.

Although an embodiment of the present invention has been described, the present invention is not limited to the above-described embodiment. For example, the cover construction including the resin covers and knee-grip covers is not limited to the above-described implementations. For example, to the rearmost point of each knee-grip cover may be connected a cover other than a resin cover. Further, the front side covers may be omitted. The air-duct inlets of the front side covers may be omitted. Furthermore, the ribs on each knee-grip cover may be omitted. The screen plate of each knee-grip cover may be omitted. The front side covers may be replaced by front cowls covering at least part of the power unit. Further, the front side covers may protrude forward of the front fork. Furthermore, additional covers may be provided. For example, an additional cover different from a resin cover or rear side cover may be provided between each knee-grip cover and the seat. Further, a front cowl covering the front of the vehicle may be provided. It should be noted that the various covers of the present embodiment may be referred to as shrouds or cowls.

Further, the arrangement with the flange on the fuel tank located in the vicinity of the resin covers or knee-grip covers is not limited to the above-described implementations. For example, the flange on the fuel tank and the resin covers or knee-grip covers may be tightened together by fastening members.

Moreover, the straddled vehicle to which the present invention can be applied is not limited to the above-illustrated implementations. For example, the vehicle-body frame may have a pair of main frame portions located to the left and right and the main frame portions may be formed integrally with the vertical frame portions. The fuel tank may be located below the seat.

The above-illustrated embodiment is an example where the present invention is applied to a motorcycle; however, vehicles to which the present invention can be applied are not limited to motorcycles. The present invention may be applied to straddled vehicles other than motorcycles (e.g. tricycles). Straddled vehicle as used herein means any vehicle which a rider can ride where the rider sits astride a saddle.

## Claims

1. A straddled vehicle (1) comprising:
a vehicle-body frame (2);
a seat (8) supported by the vehicle-body frame (2);
a resin cover (31) provided forward of the seat (8) as determined along a front-rear direction of the vehicle-body frame (2), the resin cover (31) being located above the vehicle-body frame (2) and forming an outer surface of a left portion and an outer surface of a right portion of the vehicle (1) as determined along a left-right direction of the vehicle-body frame (2), the resin cover (31) being made from a resin; and
a knee-grip cover (32), at least a part of an upper edge of the knee-grip cover (32) as determined along a top-bottom direction of the vehicle-body frame (2) being connected to at least a part of a bottom edge of the resin cover (31) as viewed from a side, the knee-grip cover (32) having a rearmost point (32r) located forward of a forwardmost point (8f) of the seat (8) as viewed from the side,
**characterised in that** the upper edge of the knee-grip cover (32) and the lower edge of the resin cover (31) are connected with each other along a line (K1), which is a portion of a borderline (K1/K2) between the resin cover (31) and knee-grip cover (32), and at least one of the resin cover (31) and the knee-grip cover (32) includes a stepped portion located in portions where the one connects with the other along the line (K1), and
wherein the line (K1) extends upward and forward from the rearmost point (32r) of the knee-grip cover (32).

2. The straddled vehicle (1) according to claim 1, wherein the borderline (K1/ K2) between the resin cover (31) and the knee-grip cover (32) includes a line (K2) extending obliquely from the rearmost point (32r) of the knee-grip cover (32) downwardly and forwardly as viewed from the side.

3. The straddled vehicle (1) according to claim 1 or 2, wherein the borderline (K1/K2) between the resin cover (31) and the knee-grip cover (32) includes a portion located higher than the vehicle-body frame (2) as viewed from the side.

4. The straddled vehicle (1) according to any one of claims 1 to 3, further including a fuel tank (23) located higher than the vehicle-body frame (2), the fuel tank (23) being supported by the vehicle-body frame (2) and located forward of the seat (8),
wherein the resin cover (31) is a tank cover covering the fuel tank (23),
the fuel tank (23) includes a flange (23a) extending in the front-rear direction of the vehicle-body frame (2) on a side of the fuel tank (23), and
the flange (23a) of the fuel tank (23) is located in a vicinity of at least one of the resin cover (31) and the knee-grip cover (32).

5. The straddled vehicle (1) according to claim 4, wherein the flange (23a) of the fuel tank (23) crosses the borderline (K1/K2) between the resin cover (31) and the knee-grip cover (32) as viewed from the side and is located in a vicinity of a portion of each of the resin cover (31) and the knee-grip cover (32) that is adjacent to the borderline (K1/K2).

6. The straddled vehicle (1) according to any one of claims 1 to 5, wherein a portion of the vehicle-body frame (2) located forward of the seat (8) and covered with the resin cover (31) includes one central frame portion (2c) located at a center of the straddled vehicle (1) as determined along the left-right direction of the vehicle-body frame (2) and extending in the front-rear direction.

7. The straddled vehicle (1) according to any one of claims 1 to 6, further including a front side cover (33) located forward of the knee-grip cover (32) and covering a side of the vehicle-body frame (2).

8. The straddled vehicle (1) according to claim 7, wherein the front side cover (33) has an air-duct inlet (35) for passing air in the front-rear direction of the vehicle-body frame (2).

9. The straddled vehicle (1) according to claim 8, wherein the knee-grip cover (32) includes:
a screen plate (32c) including a surface overlapping the air-duct inlet (35) as viewed from a front; and
a side plate (33c1) extending rearward from the air-duct inlet (35) and positioned to overlap the screen plate (32) as viewed from the side.

10. The straddled vehicle (1) according to claim 9, wherein the knee-grip cover (32) includes a rib (32a, 32b) extending rearward from the screen plate (32c).

11. The straddled vehicle (1) according to any one of claims 1 to 10, wherein the knee-grip cover (32) is made from a resin.

12. The straddled vehicle (1) according to any of claims 1 to 11, wherein in the portions where the resin cover (31) connects with the knee-grip cover (32) along the line (K1), the outer surface of the resin cover (31) is flush with the outer surface of the knee-grip cover (32) and the resin cover (31) and knee-grip cover (32) overlap each other in the thickness direction, such that the portions of the resin cover (31) and knee-grip cover (32) connected with each other protrude inwardly.

13. The straddled vehicle (1) according to any of claims 1 to 12, wherein
the stepped portion of the resin cover (31) includes bent portions (31b-d), wherein the bent portions (31b-d) form a groove located adjacent the edge of the resin cover (31) and recessed inwardly, and
the edge of the knee-grip cover (32) protruding inwardly is fitted into the groove formed by the three bent portions (31b-d) of the resin cover (31) along the line (K1).

## Patentansprüche

1. Spreizsitz-Typ Fahrzeug (1), umfassend:
einen Fahrzeugkarosserierahmen (2);
einen Sitz (8), der von dem Fahrzeugkarosserierahmen (2) gehalten wird;
eine Harzabdeckung (31), die vor dem Sitz (8) entlang einer Längsrichtung des Fahrzeugkarosserierahmens (2) vorgesehen ist, wobei sich die Harzabdeckung (31) oberhalb des Fahrzeugkarosserierahmens (2) befindet und eine Außenfläche eines linken Abschnitts und eine Außenfläche eines rechten Abschnitts des Fahrzeugs (1) entlang einer Breitenrichtung des Fahrzeugkarosserierahmens (2) bildet, wobei die Harzabdeckung (31) aus einem Harz gebildet ist; und
eine Kniegriffabdeckung (32), wobei in einer Seitenansicht zumindest ein Teil einer Oberkante der Kniegriffabdeckung (32) entlang einer Höhenrichtung des Fahrzeugkarosserierahmens (2) mit mindestens einem Teil einer Unterkante der Harzabdeckung (31) verbunden ist, wobei die Kniegriffabdeckung (32) einen hintersten Punkt (32r) hat, der in einer Seitenansicht vor einem vordersten Punkt (8f) des Sitzes (8) angeordnet ist,
**dadurch gekennzeichnet, dass**
die Oberkante der Kniegriffabdeckung (32) und die Unterkante der Harzabdeckung (31) entlang einer Linie (K1) miteinander verbunden sind, die ein Abschnitt einer Grenzlinie (K1/K2) zwischen der Harzabdeckung ist (31) und Kniegriffabdeckung (32) ist, wobei die Harzabdeckung (31) und/oder die Kniegriffabdeckung (32) einen Stufenabschnitt umfasst, der in Abschnitten angeordnet ist, in denen die eine Abdeckung und die andere Abdeckung entlang der Linie (K1) miteinander verbunden sind, und
wobei sich die Linie (K1) vom hintersten Punkt (32r) der Kniegriffabdeckung (32) nach oben und nach vorne erstreckt.

2. Spreizsitz-Typ Fahrzeug (1) nach Anspruch 1, wobei die Grenzlinie (K1/K2) zwischen der Harzabdeckung (31) und der Kniegriffabdeckung (32) eine Linie (K2) umfasst, die sich in einer Seitenansicht schräg vom hintersten Punkt (32r) der Kniegriffabdeckung (32) nach unten und nach vorne erstreckt.

3. Spreizsitz-Typ Fahrzeug (1) nach Anspruch 1 oder 2, wobei die Grenzlinie (K1/K2) zwischen der Kunstharzabdeckung (31) und der Kniegriffabdeckung (32) einen Abschnitt aufweist, der in einer Seitenansicht höher als der Fahrzeugkarosserierahmen (2) angeordnet ist.

4. Spreizsitz-Typ Fahrzeug (1) nach einem der Ansprüche 1 bis 3, ferner umfassend einen Kraftstofftank (23), der höher als der Fahrzeugkarosserierahmen (2) angeordnet ist, wobei der Kraftstofftank (23) von dem Fahrzeugkarosserierahmen (2) gehalten und vor dem Sitz (8) angeordnet ist,
wobei die Harzabdeckung (31) eine Tankabdeckung ist, die den Kraftstofftank (23) abdeckt,
der Kraftstofftank (23) einen Flansch (23a) umfasst, der sich in der Längsrichtung des Fahrzeugkarosserierahmens (2) auf einer Seite des Kraftstofftanks (23) erstreckt, und
der Flansch (23a) des Kraftstofftanks (23) sich in der Nähe der Harzabdeckung (31) und/oder der Kniegriffabdeckung (32) befindet.

5. Spreizsitz-Typ Fahrzeug (1) nach Anspruch 4, wobei in einer Seitenansicht der Flansch (23a) des Kraftstofftanks (23) die Grenzlinie (K1/K2) zwischen der Harzabdeckung (31) und der Kniegriffabdeckung (32) kreuzt und sich in der Nähe eines Abschnitts von sowohl der Harzabdeckung (31) als auch der Kniegriffabdeckung (32), die an die Grenzlinie (K1 / K2) angrenzt, befindet.

6. Spreizsitz-Typ Fahrzeug (1) nach einem der Ansprüche 1 bis 5, wobei ein Abschnitt des Fahrzeugkarosserierahmens (2), der sich vor dem Sitz (8) befindet und mit der Harzabdeckung (31) bedeckt ist, einen mittleren Rahmenabschnitt (2c) umfasst, der sich in einer Mitte des Spreizsitz-Typ Fahrzeugs (1) entlang der Breitenrichtung des Fahrzeugkarosserierahmens (2) befindet und sich in Längsrichtung erstreckt.

7. Spreizsitz-Typ Fahrzeug (1) nach einem der Ansprüche 1 bis 6, ferner umfassend eine vordere Seitenabdeckung (33), die vor der Kniegriffabdeckung (32) angeordnet ist und eine Seite des Fahrzeugkarosserierahmens (2) abdeckt.

8. Spreizsitz-Typ Fahrzeug (1) nach Anspruch 7, wobei die Vorderseitenabdeckung (33) einen Luftkanaleinlass (35) zum Hindurchleiten von Luft in Längsrichtung des Fahrzeugkarosserierahmens (2) aufweist.

9. Spreizsitz-Typ Fahrzeug (1) nach Anspruch 8, wobei die Kniegriffabdeckung (32) umfasst:
eine Siebplatte (32c) mit einer Oberfläche, die den Luftkanaleinlass (35) von vorne gesehen überlappt; und
eine Seitenplatte (33c1), die sich vom Luftkanaleinlass (35) nach hinten erstreckt und so positioniert ist, dass sie die Siebplatte (32) von der Seite gesehen überlappt.

10. Spreizsitz-Typ Fahrzeug (1) nach Anspruch 9, wobei die Kniegriffabdeckung (32) eine Rippe (32a, 32b) umfasst, die sich von der Siebplatte (32c) nach hinten erstreckt.

11. Spreizsitz-Typ Fahrzeug (1) nach einem der Ansprüche 1 bis 10, wobei die Kniegriffabdeckung (32) aus einem Harz hergestellt ist.

12. Spreizsitz-Typ Fahrzeug (1) nach einem der Ansprüche 1 bis 11, wobei in den Abschnitten, an denen die Harzabdeckung (31) mit der Kniegriffabdeckung (32) entlang der Linie (K1) verbunden ist, die Außenfläche der Harzabdeckung (31) bündig mit der Außenfläche der Kniegriffabdeckung (32) ist, und die Harzabdeckung (31) und die Kniegriffabdeckung (32) einander in der Dickenrichtung so überlappen, dass die Abschnitte der Harzabdeckung (31) und der Kniegriffabdeckung (32), die miteinander verbunden sind, nach innen vorstehen.

13. Spreizsitz-Typ Fahrzeug (1) nach einem der Ansprüche 1 bis 12, wobei
der Stufenabschnitt der Harzabdeckung (31) gebogene Abschnitte (31b-d) umfasst, wobei die gebogenen Abschnitte (31b-d) eine Nut bilden, die neben der Kante der Harzabdeckung (31) angeordnet und nach innen vertieft ausgebildet ist, und
die nach innen vorstehende Kante der Kniegriffabdeckung (32) in die Nut eingepasst ist, die durch die drei gebogenen Abschnitte (31b-d) der Harzabdeckung (31) entlang der Linie (K1) gebildet wird.

## Revendications

1. Véhicule à enfourcher (1) comprenant :
un châssis de carrosserie de véhicule (2) ;
un siège (8) supporté par le châssis de carrosserie de véhicule (2) ;
un couvercle en résine (31) disposé à l'avant du siège (8), comme déterminé le long d'une direction avant-arrière du châssis de carrosserie de véhicule (2), le couvercle en résine (31) étant situé au-dessus du châssis de carrosserie de véhicule (2) et formant une surface extérieure d'une partie gauche et une surface extérieure d'une partie droite du véhicule (1) comme déterminé le long d'une direction gauche-droite du châssis de carrosserie de véhicule (2), le couvercle en résine (31) étant constitué d'une résine ; et
un couvercle de prise de genou (32), au moins une partie d'un bord supérieur du couvercle de prise de genou (32) comme déterminé le long d'une direction haut-bas du châssis de carrosserie de véhicule (2) étant connectée à au moins une partie d'un bord inférieur du couvercle en résine (31), comme observé depuis un côté, le couvercle de prise de genou (32) ayant un point le plus en arrière (32r) situé en avant d'un point le plus en avant (8f) du siège (8), come observé depuis le côté,
**caractérisé en ce que** le bord supérieur du couvercle de prise de genou (32) et le bord inférieur du couvercle en résine (31) sont connectés l'un à l'autre le long d'une ligne (K1), qui est une partie d'une limite (K1/K2) entre le couvercle en résine (31) et le couvercle de prise de genou (32), et au moins un premier parmi le couvercle en résine (31) et le couvercle de prise de genou (32) comprend une partie étagée située dans des parties où le premier se connecte à l'autre le long de la ligne (K1), et
dans lequel la ligne (K1) s'étend vers le haut et vers l'avant à partir du point le plus en arrière (32r) du couvercle de prise de genou (32).

2. Véhicule à enfourcher (1) selon la revendication 1, dans lequel la limite (K1/K2) entre le couvercle en résine (31) et le couvercle de prise de genou (32) comprend une ligne (K2) s'étendant obliquement à partir du point le plus en arrière (32r) du couvercle de prise de genou (32) vers le bas et vers l'avant, comme observé depuis le côté.

3. Véhicule à enfourcher (1) selon la revendication 1 ou 2, dans lequel la limite (K1/K2) entre le couvercle en résine (31) et le couvercle de prise de genou (32) comprend une partie située plus haut que le châssis de carrosserie de véhicule (2) comme observé depuis le côté.

4. Véhicule à enfourcher (1) selon l'une quelconque des revendications 1 à 3, comprenant en outre un réservoir de carburant (23) situé plus haut que le châssis de carrosserie de véhicule (2), le réservoir de carburant (23) étant supporté par le châssis de carrosserie de véhicule (2) et situé en avant du siège (8),
dans lequel le couvercle en résine (31) est un couvercle de réservoir recouvrant le réservoir de carburant (23),
le réservoir de carburant (23) comprend une bride (23a) s'étendant dans la direction avant-arrière du châssis de carrosserie de véhicule (2) sur un côté du réservoir de carburant (23), et
la bride (23a) du réservoir de carburant (23) est située à proximité d'au moins l'un parmi le couvercle en résine (31) et le couvercle de prise de genou (32).

5. Véhicule à enfourcher (1) selon la revendication 4, dans lequel la bride (23a) du réservoir de carburant (23) traverse la limite (K1/K2) entre le couvercle en résine (31) et le couvercle de prise de genou (32) comme observé depuis le côté et est situé à proximité d'une partie de chacun des couvercle en résine (31) et couvercle de prise de genou (32) qui est adjacente à la limite (K1/K2).

6. Véhicule à enfourcher (1) selon l'une quelconque des revendications 1 à 5, dans lequel une partie du châssis de carrosserie de véhicule (2) située en avant du siège (8) et recouverte du couvercle en résine (31) comprend une partie centrale de châssis (2c) située au centre du véhicule à enfourcher (1), comme déterminé le long de la direction gauche-droite du châssis de carrosserie de véhicule (2) et s'étendant dans la direction avant-arrière.

7. Véhicule à enfourcher (1) selon l'une quelconque des revendications 1 à 6, comprenant en outre un couvercle latéral avant (33) situé en avant du couvercle de prise de genou (32) et recouvrant un côté du châssis de carrosserie de véhicule (2).

8. Véhicule à enfourcher (1) selon la revendication 7, dans lequel le couvercle latéral avant (33) a une entrée de conduit d'air (35) pour faire passer de l'air dans la direction avant-arrière du châssis de carrosserie de véhicule (2).

9. Véhicule à enfourcher (1) selon la revendication 8, dans lequel le couvercle de prise de genou (32) comprend :
une plaque écran (32c) comprenant une surface chevauchant l'entrée de conduit d'air (35), comme observé depuis l'avant ; et
une plaque latérale (33c1) s'étendant vers l'arrière à partir de l'entrée de conduit d'air (35) et positionnée pour chevaucher la plaque écran (32), comme observé depuis le côté.

10. Véhicule à enfourcher (1) selon la revendication 9, dans lequel le couvercle de prise de genou (32) comprend une nervure (32a, 32b) s'étendant vers l'arrière à partir de la plaque écran (32c).

11. Véhicule à enfourcher (1) selon l'une quelconque des revendications 1 à 10, dans lequel le couvercle de prise de genou (32) est fabriqué à partir d'une résine.

12. Véhicule à enfourcher (1) selon l'une quelconque des revendications 1 à 11, dans lequel, dans les parties où le couvercle en résine (31) est connecté au couvercle de prise de genou (32) le long de la ligne (K1), la surface extérieure du couvercle en résine (31) affleure la surface extérieure du couvercle de prise de genou (32) et le couvercle en résine (31) et le couvercle de prise de genou (32) se chevauchent l'un l'autre dans la direction d'épaisseur, de sorte que les parties du couvercle en résine (31) et du couvercle de prise de genou (32) connectées l'une à l'autre font saillie vers l'intérieur.

13. Véhicule à enfourcher (1) selon l'une quelconque des revendications 1 à 12, dans lequel
la partie étagée du couvercle en résine (31) comprend des parties courbées (31b-d), les parties courbées (31b-d) formant une rainure située à proximité adjacente du bord du couvercle en résine (31) et enfoncée vers l'intérieur, et
le bord du couvercle de prise de genou (32) faisant saillie vers l'intérieur est ajusté dans la rainure formée par les trois parties courbées (31b-d) du couvercle en résine (31) le long de la ligne (K1).
